# FASCICULE DE BREVET EUROPEEN

(11) **EP 2 499 948 B1**
(45) Date de publication et mention de la délivrance du brevet: **27.04.2016**
(21) Numéro de dépôt: 12159316.4
(22) Date de dépôt: 13.03.2012
(51) Int. Cl.: A47J 45/10, A47J 36/16, A47J 45/07, A47J 27/13

(54) **Poignée de préhension amovible notamment pour accessoire de cuisson**
Abnehmbarer Griff für Koch-Zubehör
Removable gripping handle for cooking accessory

(30) Priorité: 16.03.2011 FR 1152153
(43) Date de publication de la demande: 19.09.2012
(73) Titulaire: SEB S.A., 69130 Ecully (FR)
(72) Inventeur: Reiner, Guillaume, 38000 Grenoble (FR); Bizard, Jean-Claude, 21121 Fontaine les Dijon (FR)
(74) Mandataire: Cémeli, Eric Philippe Laurent

(56) Documents cités:
- WO-A1-2007/032614
- FR-A1- 2 898 031
- US-A- 2 598 747
- US-A1- 2005 220 955
- US-A1- 2009 095 169
- US-B1- 6 260 733

## Description

La présente invention concerne le domaine technique des poignées de préhension amovibles.

La présente invention concerne notamment, mais non exclusivement, les poignées de préhension pour un accessoire de cuisson comportant un support de cuisson.

La présente invention concerne plus particulièrement, mais non exclusivement, les poignées de préhension pour un accessoire de cuisson utilisé dans un appareil électrique de cuisson comportant une enceinte de cuisson et un support de cuisson agencé dans l'enceinte de cuisson.

Il est connu du document US 2 598 747 une poignée de préhension amovible comportant un coulisseau monté mobile en translation dans un corps de poignée contre un moyen de rappel élastique. Le coulisseau est formé par une tige présentant à une extrémité un disque formant un organe de retenue et à l'autre extrémité un bouton de manoeuvre. Cette construction nécessite un assemblage de l'organe de retenue et/ou du bouton de manoeuvre après la mise en place de la tige.

Une poignée de préhension amovible selon le préambule de la revendication 1 est connue du document FR 2 898 031.

Un but de la présente invention est de simplifier la réalisation d'une poignée de préhension amovible comportant un coulisseau.

Un autre but de la présente invention est de simplifier la réalisation d'un accessoire de cuisson comportant une poignée de préhension amovible.

Ces buts sont atteints avec une poignée de préhension amovible, notamment pour accessoire de cuisson, comportant un corps principal et un coulisseau monté mobile en translation sur le corps principal contre un moyen de rappel élastique entre une position de repos et une position de dégagement dans laquelle le moyen de rappel élastique exerce un effort de rappel vers la position de repos, le moyen de rappel élastique étant porté par le coulisseau, respectivement par le corps principal, le coulisseau pouvant être monté sur le corps principal pour occuper une position d'assemblage distincte de la position de repos, du fait que le moyen de rappel élastique comporte un brin libre bloqué par un organe de retenue appartenant au corps principal, respectivement au coulisseau, le déplacement du coulisseau de la position d'assemblage vers la position de dégagement entraînant le blocage du brin libre du moyen de rappel élastique par l'organe de retenue. Les opérations de montage de la poignée de préhension amovible peuvent ainsi être limitées à la mise en place du moyen de rappel élastique sur le coulisseau ou sur le corps principal puis à la mise en place du coulisseau sur le corps principal.

Selon une forme de réalisation préférée, la position de repos est agencée entre la position d'assemblage et la position de dégagement. Ainsi un simple mouvement de translation de la position d'assemblage vers la position de dégagement permet d'assurer le montage du coulisseau sur le corps principal.

Selon une construction avantageuse, le coulisseau, respectivement le corps principal, porte deux rainures latérales opposées et le corps principal, respectivement le coulisseau, porte deux ergots prévus pour coulisser dans les rainures latérales entre la position de repos et la position de dégagement.

Avantageusement alors, chacune des rainures latérales présente une encoche prévue pour l'introduction d'un des ergots dans ladite rainure latérale pour amener le coulisseau en position d'assemblage. Ainsi la mise en place du coulisseau dans la position d'assemblage ne s'effectue pas nécessairement selon la même direction que le déplacement de la position d'assemblage vers la position de dégagement.

Avantageusement encore, le corps principal, respectivement le coulisseau, porte deux autres ergots prévus pour coulisser dans les rainures latérales entre la position de repos et la position de dégagement.

Selon une forme de réalisation avantageuse, le moyen de rappel élastique est un ressort hélicoïdal.

Avantageusement alors, le brin libre est formé par une extrémité libre du ressort hélicoïdal. Avantageusement alors, le ressort hélicoïdal comporte une autre extrémité libre agencée contre une paroi du logement de retenue. En alternative, le ressort hélicoïdal pourrait notamment être monté sur une tige de retenue portée par le coulisseau, respectivement par le corps principal.

Avantageusement encore, le ressort hélicoïdal est monté en compression dans un logement de retenue ménagé dans le coulisseau, respectivement dans le corps principal.

Selon une forme de réalisation avantageuse facilitant la mise en place et le retrait de la poignée amovible de préhension, le coulisseau est agencé sur le corps principal entre une zone de préhension du corps principal et une conformation de retenue du corps principal et le déplacement du coulisseau vers la position de dégagement écarte une autre conformation de retenue ménagée sur le coulisseau de la conformation de retenue du corps principal.

Avantageusement alors, la conformation de retenue du corps principal appartient à une ouverture traversant le corps principal. Cette disposition permet de supporter une charge plus élevée.

Avantageusement alors, l'ouverture est circulaire. Cette disposition permet de faciliter le positionnement de la poignée de préhension amovible.

Ces buts sont atteints aussi avec un accessoire de cuisson comportant un support de cuisson présentant un organe de préhension et une poignée de préhension amovible prévue pour être montée sur l'organe de préhension, du fait que la poignée de préhension amovible est conforme à l'une au moins des caractéristiques précitées.

Avantageusement alors, l'organe de préhension est agencé en position centrale par rapport au support de cuisson. Cette disposition permet de réduire les efforts exercés sur la poignée de préhension amovible.

Avantageusement encore, le support de cuisson présente une configuration circulaire. Cette disposition permet de faciliter la construction d'un appareil de cuisson présentant un accessoire de cuisson tournant.

Ces buts sont atteints aussi avec un appareil électrique de cuisson comportant une enceinte de cuisson, et un support de cuisson agencé dans l'enceinte de cuisson, du fait que le support de cuisson présente un organe de préhension sur lequel est monté une poignée de préhension amovible selon l'une au moins des caractéristiques précitées.

Ainsi l'appareil électrique de cuisson comporte une enceinte de cuisson et un support de cuisson agencé dans l'enceinte de cuisson, le support de cuisson présentant un organe de préhension, l'appareil électrique de cuisson comportant une poignée de préhension amovible prévue pour être montée sur l'organe de préhension, la poignée de préhension amovible étant conforme à l'une au moins des caractéristiques précitées.

L'invention sera mieux comprise à l'étude d'un exemple de réalisation, pris à titre nullement limitatif, illustré dans les figures annexées, dans lesquelles :
- la figure 1 est une vue en éclaté d'un appareil électrique de cuisson comportant une poignée amovible pour accessoire de cuisson selon l'invention,
- la figure 2 est une vue de côté en perspective de la poignée amovible illustrée sur la figure 1,
- la figure 3 est une vue de dessus en perspective de la poignée amovible illustrée sur les figures 1 et 2,
- la figure 4 est une vue de dessus en perspective et en section partielle de la poignée amovible illustrée sur les figures 1 à 3,
- la figure 5 est une vue de dessus en perspective du coulisseau de la poignée amovible illustrée sur les figures 1 à 4,
- la figure 6 est une vue de dessous en perspective du coulisseau de la poignée amovible illustrée sur les figures 1 à 4,
- la figure 7 est une vue de dessus en perspective du corps de la poignée amovible illustrée sur les figures 1 à 4,
- la figure 8 est une vue en perspective d'un plateau de cuisson illustré sur la figure 1,
- la figure 9 est une vue partielle de dessus en perspective de la poignée amovible illustrée sur les figures 1 à 4 montée sur le plateau de cuisson illustré sur la figure 8.

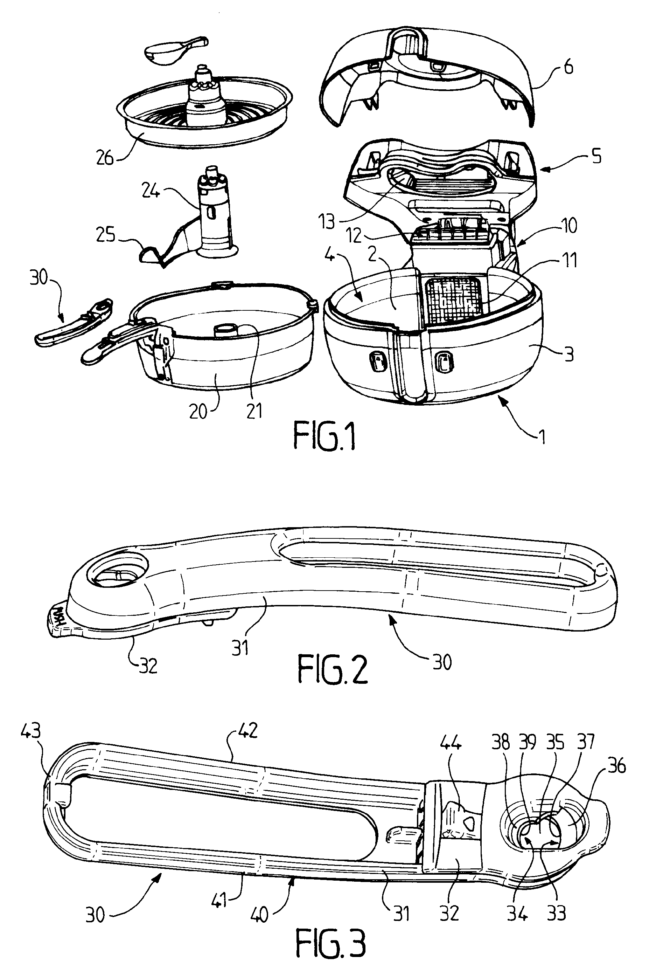

L'appareil électrique de cuisson illustré sur la figure 1 comporte un boîtier 1 formant une enceinte de cuisson 2. Le boîtier 1 comprend un corps de boîtier 3 présentant une ouverture supérieure 4 et un couvercle 5 monté articulé sur le corps de boîtier 3. Le couvercle 5 comprend un capot 6 amovible réalisé de préférence en matière transparente.

L'appareil électrique de cuisson comporte un dispositif de chauffe 10 conçu pour générer un flux chauffant dans l'enceinte de cuisson 2. Le dispositif de chauffe 10 est avantageusement logé dans le boîtier 1. Le dispositif de chauffe 10 comprend une entrée d'air 11 reliée par un conduit 12 à une sortie d'air 13 débouchant dans l'enceinte de cuisson 2. Le dispositif de chauffe 10 comprend des moyens de chauffe et des moyens de ventilation, agencés dans le conduit 12, non visibles sur la figure 1.

L'appareil électrique de cuisson comporte une cuve 20 prévue pour être logée dans le corps de boîtier 3. La cuve 20 présente une cheminée 21 prévue pour recevoir un moyeu 24 d'une pale 25. Le moyeu 24 est entrainé en rotation par des moyens d'entraînement disposés dans le boîtier 1, non visibles sur la figure 1. Un plateau de cuisson 26 peut être disposé sur le moyeu 24.

L'appareil électrique de cuisson comporte une poignée de préhension 30 amovible, illustrée sur la figure 2.

Tel que mieux visible sur la figure 3, la poignée de préhension 30 comporte un corps principal 31 et un coulisseau 32 monté mobile en translation sur le corps principal 31.

Le corps principal 31 est allongé. Le coulisseau 32 est disposé près d'une extrémité du corps principal 31.

Le corps principal 31 comporte une conformation de retenue 33 et le coulisseau 32 comporte une autre conformation de retenue 34. La conformation de retenue 33 et l'autre conformation de retenue 34 définissent un passage libre 35 lorsque le coulisseau 32 occupe la position de repos illustrée sur la figure 3.

De manière préférée, la conformation de retenue 33 comporte une face d'appui supérieure 36 et une face d'appui latérale 37 ; l'autre conformation de retenue 34 comporte une autre face d'appui supérieure 38 et une autre face d'appui latérale 39. La face d'appui supérieure 36 et l'autre face d'appui supérieure 38 sont avantageusement planes et la face d'appui latérale 37 et l'autre face d'appui latérale 39 sont avantageusement concaves et concentriques lorsque le coulisseau 32 occupe la position de repos illustrée sur la figure 3.

Le corps principal 31 comporte une zone de préhension 40 agencée à distance du coulisseau 32. La zone de préhension 40 comporte avantageusement deux montants 41, 42 reliés par une extrémité 43. Le coulisseau 32 est agencé sur le corps principal 31 entre la zone de préhension 40 et la conformation de retenue 33.

Le coulisseau 32 comporte un organe de manoeuvre 44. Le coulisseau 32 est mobile à partir de la position de repos en direction de la zone de préhension 40.

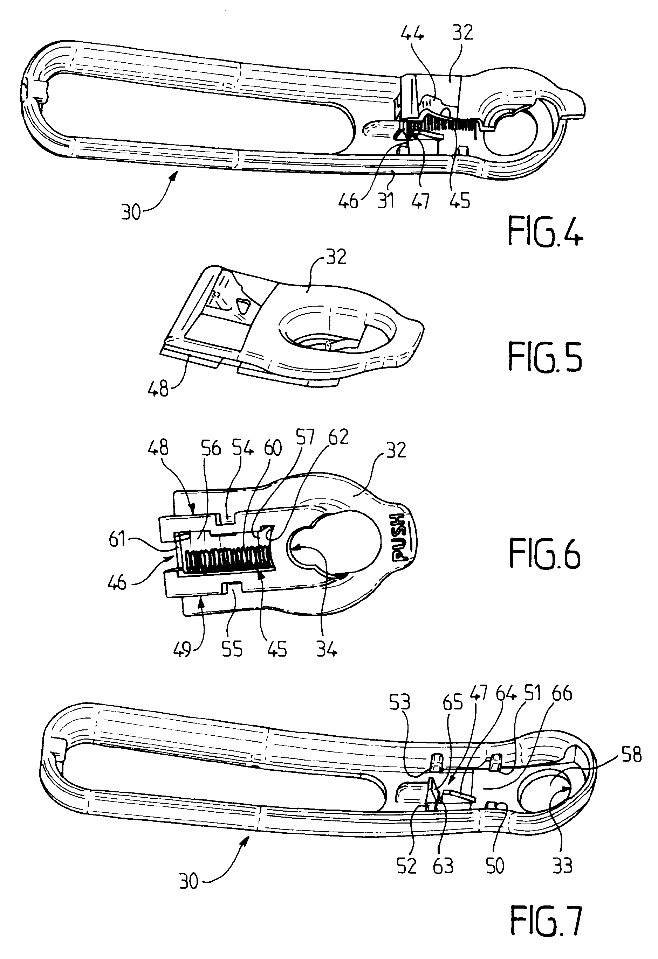

Tel que mieux visible sur la figure 4, le coulisseau 32 est monté mobile sur le corps principal 31 contre un moyen de rappel élastique 45.

Le coulisseau 32 est monté mobile entre une position de repos, illustrée sur les figures 3 et 4, et une position de dégagement, dans laquelle le moyen de rappel élastique 45 exerce un effort de rappel vers la position de repos.

Plus particulièrement selon l'invention, le coulisseau 32 peut être monté sur le corps principal 31 pour occuper une position d'assemblage. Le déplacement du coulisseau 32 de la position d'assemblage vers la position de dégagement entraine le blocage d'un brin libre 46 du moyen de rappel élastique 45 par un organe de retenue 47.

Dans l'exemple de réalisation illustré sur les figures, la position de repos est agencée entre la position d'assemblage et la position de dégagement.

Dans l'exemple de réalisation illustré sur les figures, le moyen de rappel élastique 45 est porté par le coulisseau 32, et l'organe de retenue 47 appartient au corps principal 31.

Plus particulièrement, tel que visible sur les figures 5 à 7, le coulisseau 32 porte deux rainures latérales 48, 49 opposées et le corps principal 31 porte deux ergots 50, 51 prévus pour coulisser dans les rainures latérales 48, 49 entre la position de repos et la position de dégagement. Le corps principal 31 porte deux autres ergots 52, 53 prévus pour coulisser dans les rainures latérales 48, 49 entre la position de repos et la position de dégagement.

Tel que mieux visible sur la figure 6, chacune des rainures latérales 48, 49 présente une encoche 54, 55 prévue pour l'introduction d'un des ergots 50, 51 dans ladite rainure latérale 48, 49 pour amener le coulisseau 32 en position d'assemblage.

Dans l'exemple de réalisation illustré sur les figures, le moyen de rappel élastique 45 est un ressort hélicoïdal 60, et le brin libre 46 est formé par une extrémité libre 61 du ressort hélicoïdal 60.

Tel que mieux visible sur la figure 6, le ressort hélicoïdal 60 est monté en compression dans un logement de retenue 56 ménagé dans le coulisseau 32. Selon la forme de réalisation préférée illustrée sur les figures, le ressort hélicoïdal 60 comporte une autre extrémité libre 62 agencée contre une paroi de fond 57 du logement de retenue 56. Cette autre extrémité libre 62 empêche le ressort hélicoïdal 60 de tourner.

Le brin libre 46 ainsi assemblé retient le coulisseau 32 en position de repos et empêche le coulisseau 32 de revenir en position d'assemblage.

Tel que montré sur les figures 4 et 7, l'organe de retenue 47 est formé par une encoche 63 disposée entre une rampe 64 et une butée 65. La rampe 64 et la butée 65 s'élèvent à partir d'un fond 66 du corps principal 31.

Tel que mieux visible sur la figure 7, la conformation de retenue 33 du corps principal 31 appartient à une ouverture 58 traversant le corps principal 31. L'ouverture 58 est avantageusement circulaire.

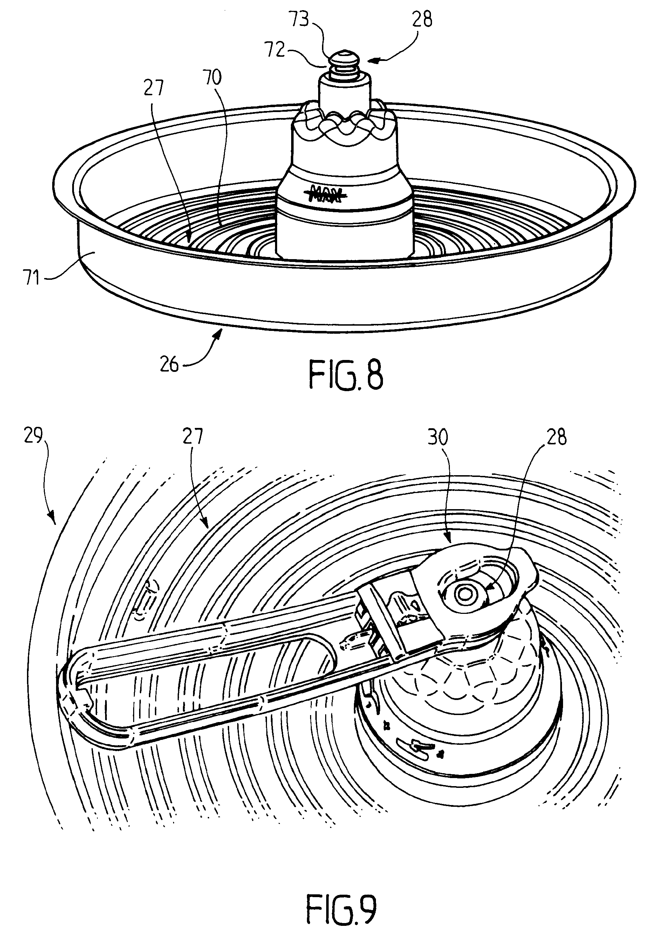

Le plateau de cuisson 26 illustré sur la figure 8 forme un support de cuisson 27 présentant un organe de préhension 28. Le support de cuisson 27 présente une géométrie circulaire. Le support de cuisson 27 comporte un fond nervuré 70 entouré par une paroi latérale 71. L'organe de préhension 28 est agencé en position centrale par rapport au support de cuisson 27. L'organe de préhension 28 comporte une gorge annulaire 72 surmontée d'une collerette 73.

La poignée de préhension 30 amovible est prévue pour être montée sur l'organe de préhension 28.

La figure 9 illustre un accessoire de cuisson 29 comportant le support de cuisson 27 et la poignée de préhension 30 amovible montée sur l'organe de préhension 28. Le coulisseau 32 occupe une position de maintien intermédiaire entre la position de repos et la position de dégagement. Le moyen de rappel (non visible sur la figure 9) exerce alors un effort de rappel sur le coulisseau 32. Cet effort de rappel permet d'obtenir un effort de serrage sur l'organe de préhension 28.

Ainsi dans la position de maintien de l'organe de préhension 28 intermédiaire entre la position de repos et la position de dégagement représentée sur la figure 9, l'effort de rappel exercé sur le coulisseau 32 par le moyen de rappel élastique 45 permet d'obtenir un effort de serrage sur l'organe de préhension 28 de l'accessoire de cuisson 29, l'organe de préhension 28 étant maintenu entre le corps principal 31 et le coulisseau 32.

L'accessoire de cuisson 29 peut être utilisé dans l'appareil électrique de cuisson illustré sur la figure 1 comportant l'enceinte de cuisson 2 et le support de cuisson 27 agencé dans l'enceinte de cuisson 2.

La poignée de préhension 30 amovible selon l'invention fonctionne et s'utilise de la manière suivante.

Le ressort hélicoïdal 60 est monté en compression dans le logement de retenue 56 ménagé dans le coulisseau 32 avec le brin libre 46 agencé à distance de la paroi de fond 57. Le coulisseau 32 est mis en place sur le corps principal 31 dans la position d'assemblage en introduisant les ergots 50, 51 dans les encoches 54, 55.

Le coulisseau 32 est assemblé avec le corps principal 31 en déplaçant le coulisseau 32 en direction de la butée 65. Le brin libre 46 atteint d'abord la rampe 64. Le déplacement du brin libre 46 le long de la rampe 64 soumet le brin libre 46 à un effort de rappel élastique. Le brin libre 46 atteignant l'encoche 63 est propulsé au fond de l'encoche 63. Le coulisseau 32 occupe alors la position de repos, le brin libre 46 étant maintenu dans le corps principal 31.

L'utilisateur saisissant le corps principal 31 par la zone de préhension 40 peut exercer un effort de traction sur l'organe de manoeuvre 44 pour déplacer le coulisseau 32 vers la position de dégagement. Le déplacement du coulisseau 32 vers la position de dégagement écarte l'autre conformation de retenue 34 de la conformation de retenue 33 et agrandit le passage libre 35. La poignée de préhension 30 amovible peut ainsi être dégagée de l'organe de préhension 28.

A titre de variante, le moyen de rappel élastique 45 pourrait être porté par le corps principal 31, l'organe de retenue 47 appartenant alors au coulisseau 32. Si désiré, le ressort hélicoïdal 60 pourrait être monté en compression dans un logement de retenue 56 ménagé dans le corps principal 31. En alternative, le ressort hélicoïdal 60 pourrait notamment être monté sur une tige de retenue portée par le corps principal 31 ou par le coulisseau 32. A titre de variante, le moyen de rappel élastique 45 n'est pas nécessairement formé par un ressort hélicoïdal.

A titre de variante, le corps principal 31 pourrait porter deux rainures latérales opposées, le coulisseau 32 portant alors deux ergots prévus pour coulisser dans les rainures latérales entre la position de repos et la position de dégagement. Si désiré, le coulisseau 32 peut alors porter deux autres ergots prévus pour coulisser dans les rainures latérales entre la position de repos et la position de dégagement.

A titre de variante, les rainures latérales 48, 49 et/ou les ergots 50, 51 et/ou les autres ergots 52, 53 et/ou les encoches 54, 55 ne sont pas nécessairement disposé(e)s de manière symétrique.

La présente invention n'est nullement limitée à l'exemple de réalisation décrit et à ses variantes, mais englobe de nombreuses modifications dans le cadre des revendications.

## Revendications

1. Poignée de préhension (30) amovible, notamment pour accessoire de cuisson, comportant un corps principal (31) et un coulisseau (32) monté mobile en translation sur le corps principal (31) contre un moyen de rappel élastique (45) entre une position de repos et une position de dégagement dans laquelle le moyen de rappel élastique (45) exerce un effort de rappel vers la position de repos, le moyen de rappel élastique (45) étant porté par le coulisseau (32), respectivement par le corps principal (31), le coulisseau (32) pouvant être monté sur le corps principal (31) pour occuper une position d'assemblage distincte de la position de repos,
le moyen de rappel élastique (45) comporte un brin libre (46) adapté a être bloqué par un organe de retenue (47) appartenant au corps principal (31), respectivement au coulisseau (32), le déplacement du coulisseau (32) de la position d'assemblage vers la position de dégagement entraînant le blocage du brin libre (46) du moyen de rappel élastique (45) par l'organe de retenue (47).

2. Poignée de préhension amovible selon la revendication 1, **caractérisée en ce que** la position de repos est agencée entre la position d'assemblage et la position de dégagement.

3. Poignée de préhension amovible selon l'une des revendications 1 ou 2, **caractérisée en ce que** le coulisseau (32), respectivement le corps principal (31), porte deux rainures latérales (48 , 49) opposées et **en ce que** le corps principal (31), respectivement le coulisseau (32), porte deux ergots (50, 51) prévus pour coulisser dans les rainures latérales (48, 49) entre la position de repos et la position de dégagement.

4. Poignée de préhension amovible selon la revendication 3, **caractérisée en ce que** chacune des rainures latérales (48, 49) présente une encoche (54, 55) prévue pour l'introduction d'un des ergots (50, 51) dans ladite rainure latérale (48, 49) pour amener le coulisseau (32) en position d'assemblage.

5. Poignée de préhension amovible selon l'une des revendications 3 ou 4, **caractérisée en ce que** le corps principal (31), respectivement le coulisseau (32), porte deux autres ergots (52, 53) prévus pour coulisser dans les rainures latérales (48, 49) entre la position de repos et la position de dégagement.

6. Poignée de préhension amovible selon l'une des revendications 1 à 5, **caractérisée en ce que** le moyen de rappel élastique (45) est un ressort hélicoïdal (60).

7. Poignée de préhension amovible selon la revendication 6, **caractérisée en ce que** le brin libre (46) est formé par une extrémité libre (61) du ressort hélicoïdal (60).

8. Poignée de préhension amovible selon l'une des revendications 6 ou 7, **caractérisée en ce que** le ressort hélicoïdal (60) est monté en compression dans un logement de retenue (56) ménagé dans le coulisseau (32), respectivement dans le corps principal (31).

9. Poignée de préhension amovible selon l'une des revendications 1 à 8, **caractérisée en ce que** le coulisseau (32) est agencé sur le corps principal (31) entre une zone de préhension (40) du corps principal (31) et une conformation de retenue (33) du corps principal (31) et **en ce que** le déplacement du coulisseau vers la position de dégagement écarte une autre conformation de retenue (34) ménagée sur le coulisseau (32) de la conformation de retenue (33) du corps principal (31).

10. Poignée de préhension amovible selon la revendication 9, **caractérisée en ce que** la conformation de retenue (33) du corps principal (31) appartient à une ouverture (58) traversant le corps principal (31).

11. Poignée de préhension amovible selon la revendication 10, **caractérisée en ce que** l'ouverture (58) est circulaire.

12. Accessoire de cuisson (29) comportant un support de cuisson (27) présentant un organe de préhension (28) et une poignée de préhension (30) amovible prévue pour être montée sur l'organe de préhension (28), **caractérisé en ce que** la poignée de préhension (30) amovible est conforme à l'une des revendications 1 à 11.

13. Accessoire de cuisson (29) selon la revendication 12, **caractérisé en ce que** l'organe de préhension (28) est agencé en position centrale par rapport au support de cuisson (27).

14. Accessoire de cuisson (29) selon l'une des revendications 12 ou 13, **caractérisé en ce que** le support de cuisson (27) présente une configuration circulaire.

15. Appareil électrique de cuisson comportant une enceinte de cuisson (2), et un support de cuisson (27) agencé dans l'enceinte de cuisson (2), **caractérisé en ce que** le support de cuisson (27) présente un organe de préhension (28) sur lequel est monté une poignée de préhension (30) amovible conforme à l'une des revendications 1 à 11.

## Patentansprüche

1. Abnehmbarer Griff (30) insbesondere für Kochzubehör, der einen Hauptteil (31) und einen Schieber (32) umfasst, der an dem Hauptteil (31) gegen ein elastisches Rückstellmittel (45) zwischen einer Ruhestellung und einer Freigabestellung verschiebbar montiert ist, in der das elastische Rückstellmittel (45) eine Rückstellkraft in Richtung der Ruhestellung ausübt, wobei das elastische Rückstellmittel (45) von dem Schieber (32) bzw. von dem Hauptteil (31) getragen wird, wobei der Schieber (32) an dem Hauptteil (31) derart montiert sein kann, dass er eine Montagestellung einnimmt, die sich von der Ruhestellung unterscheidet, wobei das elastische Rückstellmittel (45) ein freies Drahtende (46) aufweist, das durch ein Rückhalteelement (47) blockiert werden kann, das zum Hauptteil (31) bzw. zum Schieber (32) gehört, wobei das Verschieben des Schiebers (32) aus der Montagestellung in die Freigabestellung die Blockierung des freien Drahtendes (46) des elastischen Rückstellmittels (45) durch das Rückhalteelement (47) bewirkt.

2. Abnehmbarer Griff nach Anspruch 1, **dadurch gekennzeichnet, dass** die Ruhestellung zwischen der Montagestellung und der Freigabestellung liegt.

3. Abnehmbarer Griff nach einem der Ansprüche 1 oder 2, **dadurch gekennzeichnet, dass** der Schieber (32) bzw. der Hauptteil (31) zwei seitliche, sich gegenüber liegende Rillen (48, 49) aufweist und dass der Hauptteil (31) bzw. der Schieber (32) zwei Vorsprünge (50, 51) umfasst, die dafür vorgesehen sind, in den seitlichen Rillen (48, 49) zwischen der Ruhestellung und der Freigabestellung zu gleiten.

4. Abnehmbarer Griff nach Anspruch 3, **dadurch gekennzeichnet**, das jede der seitlichen Rillen (48, 49) eine Aussparung (54, 55) aufweist, die für das Einführen eines der Vorsprünge (50, 51) in die genannte seitliche Rille (48, 49) vorgesehen ist, um den Schieber (32) in die Montagestellung zu bringen.

5. Abnehmbarer Griff nach einem der Ansprüche 3 oder 4, **dadurch gekennzeichnet, dass** der Hauptteil (31) bzw. der Schieber (32) zwei weitere Vorsprünge (52, 53) aufweist, die dafür vorgesehen sind, in den seitlichen Rillen (48, 49) zwischen der Ruhestellung und der Freigabestellung zu gleiten.

6. Abnehmbarer Griff nach einem der Ansprüche 1 bis 5, **dadurch gekennzeichnet, dass** es sich bei dem elastischen Rückstellmittel (45) um eine Schraubenfeder (60) handelt.

7. Abnehmbarer Griff nach Anspruch 6, **dadurch gekennzeichnet, dass** das freie Drahtende (46) durch ein freies Ende (61) der Schraubenfeder (60) gebildet wird.

8. Abnehmbarer Griff nach einem der Ansprüche 6 oder 7, **dadurch gekennzeichnet, dass** die Schraubenfeder (60) unter Spannung in eine in dem Schieber (32) bzw. in dem Hauptteil (31) ausgebildete Rückhalteaufnahme (56) montiert ist.

9. Abnehmbarer Griff nach einem der Ansprüche 1 bis 8, **dadurch gekennzeichnet, dass** sich der Schieber (32) an dem Hauptteil (31) zwischen einem Griffbereich (40) des Hauptteils (31) und einem Rückhalteformteil (33) des Hauptteils (31) befindet und dass das Verschieben des Schiebers in die Freigabestellung ein weiteres an dem Schieber (32) ausgebildetes Rückhalteformteil (34) von dem Rückhalteformteil (33) des Hauptteils (31) entfernt.

10. Abnehmbarer Griff nach Anspruch 9, **dadurch gekennzeichnet, dass** das Rückhalteformteil (33) des Hauptteils (31) zu einer Öffnung (58) gehört, die den Hauptteil (31) durchdringt.

11. Abnehmbarer Griff nach Anspruch 10, **dadurch gekennzeichnet, dass** die Öffnung (58) kreisförmig ist.

12. Kochzubehör (29) mit einem Gargutträger (27) mit einem Greifelement (28) und einem abnehmbaren Griff (30), der für die Montage an dem Greifelement (28) vorgesehen ist, **dadurch gekennzeichnet, dass** der abnehmbare Griff (30) einem der Ansprüche 1 bis 11 entspricht.

13. Kochzubehör (29) nach Anspruch 12, **dadurch gekennzeichnet, dass** sich das Greifelement (28) in der Mitte des Gargutträgers (27) befindet.

14. Kochzubehör (29) nach einem der Ansprüche 12 oder 13, **dadurch gekennzeichnet, dass** der Gargutträger (27) einen kreisförmigen Aufbau aufweist.

15. Elektrisches Kochgerät mit einem Garbereich (2) und einem in dem Garbereich (2) angeordneten Gargutträger (27), **dadurch gekennzeichnet, dass** der Gargutträger (27) ein Greifelement (28) aufweist, auf das ein abnehmbarer Griff (30) nach einem der Ansprüche 1 bis 11 montiert wird.

## Claims

1. Removable gripping handle (30), in particular for cooking accessory comprising a main body (31) and a slide (32) mounted movably in translation on the main body (31) against an elastic return means (45) between a rest position and a release position in which the elastic return means (45) exerts a return force towards the rest position, the elastic return means (45) being carried by the slide (32), respectively by the main body (31), the slide (32) being mountable on the main body (31) to occupy an assembly position separate from the rest position, the elastic return means (45) comprises a free strand (46) adapted to be blocked by a retaining member (47) belonging to the main body (31), respectively to the slide (32), the displacement of the slide (32) from the assembly position to the release position causing the retaining member (47) to block the free strand (46) of the elastic return means (45).

2. Removable gripping handle according to claim 1, **characterised in that** the rest position is arranged between the assembly position and the release position.

3. Removable gripping handle according to claim 1 or 2, **characterised in that** the slide (32), respectively the main body (31), carries two opposite lateral grooves (48, 49) and **in that** the main body (31), respectively the slide (32), carries two lugs (50, 51) designed to slide in the lateral grooves (48, 49) between the rest position and the release position.

4. Removable gripping handle according to claim 3, **characterised in that** each of the lateral grooves (48, 49) has a notch (54, 55) designed for insertion of one of the lugs (50, 51) in said lateral groove (48, 49) to bring the slide (32) into assembly position.

5. Removable gripping handle according to claim 3 or 4, **characterised in that** the main body (31), respectively the slide (32), carries two other lugs (52, 53) designed to slide in the lateral grooves (48, 49) between the rest position and the release position.

6. Removable gripping handle according to one of claims 1 to 5, **characterised in that** the elastic return means (45) is a helical spring (60).

7. Removable gripping handle according to claim 6, **characterised in that** the free strand (46) is formed by a free end (61) of the helical spring (60).

8. Removable gripping handle according to claim 6 or 7, **characterised in that** the helical spring (60) is mounted in compression in a retaining housing (56) formed in the slide (32), respectively in the main body (31).

9. Removable gripping handle according to one of claims 1 to 8, **characterised in that** the slide (32) is arranged on the main body (31) between a gripping area (40) of the main body (31) and a retaining conformation (33) of the main body (31) and **in that** the displacement of the slide to the release position moves away another retaining conformation (34) formed on the slide (32) of the retaining conformation (33) of the main body (31).

10. Removable gripping handle according to claim 9, **characterised in that** the retaining conformation (33) of the main body (31) belongs to an opening (58) crossing the main body (31).

11. Removable gripping handle according to claim 10, **characterised in that** the opening (58) is circular.

12. Cooking accessory (29) having a cooking support (27) with a gripping member (28) and a removable gripping handle (30) designed to be mounted on the gripping member (28), **characterised in that** the removable gripping handle (30) is according to any one of claims 1 to 11.

13. Cooking accessory (29) according to claim 12, **characterised in that** the gripping member (28) is arranged centrally with respect to the cooking support (27).

14. Cooking accessory (29) according to claim 12 or 13, **characterised in that** the cooking support (27) has a circular configuration.

15. Electrical cooking appliance having a cooking chamber (2), and a cooking support (27) arranged in the cooking chamber (2), **characterised in that** the cooking support (27) has a gripping member (28) on which a removable gripping handle (30) according to one of claims 1 to 11 is mounted.
